# EUROPEAN PATENT SPECIFICATION

(11) **EP 2 581 918 B1**
(45) Date of publication and mention of the grant of the patent: **20.09.2017**
(21) Application number: 12188593.3
(22) Date of filing: 15.10.2012
(51) Int. Cl.: H01B 7/29, H01B 7/295, H01B 13/24, H01B 13/26, H01B 7/285, H01B 7/04

(54) **Gas blocking cable and method of manufacturing**
Gasblockierungskabel und Verfahren zur Herstellung
Câble de blocage de gaz et procédé de fabrication

(30) Priority: 14.10.2011 US 201161547168 P
(43) Date of publication of application: 17.04.2013
(73) Proprietor: TE Wire & Cable LLC, Saddle Brook, NJ 07663 (US)
(72) Inventor: Nadakal, Mathew J., Saddle Brook, NJ 07663 (US); Smith, Gregory J., Saddle Brook, NJ 07663 (US)
(74) Representative: Cawley, Aimee Elizabeth

(56) References cited:
- US-A- 3 832 481
- US-A- 4 440 974
- US-A1- 2008 302 556

## Description

### CLAIM OF PRIORITY

This application claims priority to U.S. Provisional Patent Application Serial No. 61/547,168, filed October 14, 2011, currently pending.

### FIELD OF THE INVENTION

The present invention relates generally to multi-conductor cables and, more particularly, to a multi-conductor cable capable of blocking passage of high pressure gases and other fluids through the interstitial spaces of the cable and a method of making the cable.

### BACKGROUND

Power generation turbines are typically housed in containment areas to protect individuals in the event of an explosion. Sensors from the turbines communicate with instrumentation and equipment in the turbine control room via multi-conductor sensor cables. In the event of an explosion in the turbine containment area, when conventional multi-conductor cables with no gas blocking capabilities are used, high pressure, hazardous gases will travel through the interstitial spaces of the cables and will reach control rooms and may cause harm to people operating the control room. Historically, gas blocking is achieved only in a cable gland assembly connection to the frame wall. Such an approach, however, leaves a leak path through the interstitial space in the cable. A need exists for a multi-conductor cable that eliminates interstitial leak paths.

The marine industry has been using water blocked cables for many years. Such cables, however, would fail to prevent the leakage of hazardous high pressure gases in the event of an explosion. Furthermore, such cables cannot withstand the high cable operating temperature environment of a power generation turbine application (up to 200°C). For example, document US2008/0302556 discloses an enhanced electrical cable having water blocking capabilities.

The IEC (International Electro-technical Commission) released Specification EN-60079-14 in 2008. This specification covers instrumentation cables that are used on power generation turbines. A need therefore exists for cables that meet the new stringent IEC requirements. Although fluid blocking technology is used in water block cables, as noted previously, the temperature rating and pressure requirements of the "explosion proof' cables necessary to meet the IEC requirements are far beyond the capability of the technology in water block cables.

A first aspect of the present invention provides a gas blocking cable comprising:
a) a plurality of wires, each wire including i. a plurality of conductors having first interstitial areas there between; ii. an insulation material circumferentially surrounding the plurality of conductors; iii. a conductor filling material positioned within the first interstitial areas between the plurality of conductors;
b) a shield circumferentially surrounding the plurality of wires so that a cable is formed with second areas between the plurality of wires;
c) a wire filling material positioned within the second areas between the plurality of wires;
d) a jacket circumferentially surrounding the shield; and
e) a layer of filling material positioned in a space between the shield and the jacket;
wherein each of the conductor filling material, the wire filling material and the layer of filling material is inert, non-flammable and able to withstand a temperature of at least approximately 200°C,
whereby, in use, passage of a high pressure gas (at a pressure of approximately 3,000 kPa (435 psi)) or a high pressure fluid (at a pressure of approximately 3,000 kPa (435 psi)) through the first interstitial areas, the second areas, and the space between the shield and the jacket is prevented.

The jacket may be extruded over the shield and the layer of filling material positioned in the space between the shield and the jacket.

The gas blocking cable may further comprise a braid circumferentially surrounding the jacket. In the gas blocking cable the plurality of wires may be twisted. The gas blocking cable may further comprise a drain wire that is twisted along with the plurality of wires. The gas blocking cable may further comprise a filler member that is twisted along with the plurality or wires.

In the gas blocking cable the wire filling material and the conductor filling material may be different materials. The wire filling material may be a silicone compound and/or the conductor filling material may be a silicone compound.

In a second aspect of the invention, there is provided a method for making a gas blocking cable comprising the steps of:
a) cabling a plurality of conductors so that first interstitial areas are formed there between;
b) applying a conductor filling material to the first interstitial areas between the plurality of conductors so that the first interstitial areas are filled, where the conductor filing material is inert, non-flammable and able to withstand a temperature of at least approximately 200°C;
c) applying insulation so as to circumferentially surround the plurality of conductors and conductor filling material so that a first wire is formed;
d) repeating steps a) through c) so that a second wire is formed;
e) cabling the first and second wires so that second areas are formed there between;
f) applying a wire filling material to the second areas between the plurality of wires so that the second areas are filled, where the wire filling material is inert, non-flammable and able to withstand a temperature of at least approximately 200°C;
g) applying a shield material so as to circumferentially surround the first and second wires and the wire filling material;
h) applying a layer of filling material over the shield material, where the filling material is inert, non-flammable and able to withstand a temperature of at least approximately 200°C; and
i) applying and extruding a jacket material circumferentially around the layer of filling material, such that the layer of filling material is positioned in a space between the shield material and the jacket material,
whereby the gas blocking cable is able to prevent passage of a high pressure gas (at a pressure of approximately 3,000 kPa (435 psi)) or a high pressure fluid (at a pressure of approximately 3,000 kPa (435 psi)) through the first interstitial areas, the second areas, and the space between the shield and the jacket.

The method may further comprise the steps of curing the applied conductor filling material and curing the applied wire filling material.

The method may further comprise the step of braiding a material over the applied jacket material.

The wire filling material and the conductor filling material may be different materials.

The wire filling material may be a silicone compound, and/or the conductor filling material may be a silicone compound.

### BRIEF DESCRIPTION OF THE DRAWINGS

Fig. 1 is a cross sectional view of an embodiment of the gas blocking cable of the invention;
Fig. 2 is a schematic view of an application device for use in creating the cable of Fig. 1;
Fig. 3 is a schematic cross sectional view of the applicator of the application device of Fig. 2;
Fig. 4 is a schematic cross sectional view of a further application device for creating the cable of Fig. 1;
Fig. 5 is a schematic cross sectional view of a further application device for creating the cable of Fig. 1;
Fig, 6 is a schematic cross sectional view of a further application device for creating the cable of Fig. 1;
Fig. 7 is a flow chart illustrating an embodiment of the gas blocking cable making process of the present invention.

### DETAILED DESCRIPTION OF EMBODIMENTS

While the gas blocking cable of the invention is described below in terms of a power generation turbine application, it may be used for other applications by varying the chosen materials and configuration (number of conductors, wires, etc.). Due to the many variations of the multi-conductor cables used in these applications and the non-circular cross-section of these cables, a configuration that is not too deviant from existing cables is preferable. This enables the end user to use the cables of the invention without significant changes to the hardware and installation process. This introduces the challenge of filling the larger interstitial spacing between the conductors requiring filling compounds that can be cured after the processing and that will not affect the flexibility of the cables.

Gas/fluid leakage can occur through a) the spaces between the strands of the conductors, b) the space between the individual wires made up of insulated stranded conductors, and c) the space between Aluminum/Mylar™ tape and outer Fluoropolymer jacket. Thus, it is clear that these three paths need to be blocked to meet the requirements of a gas blocking cable.

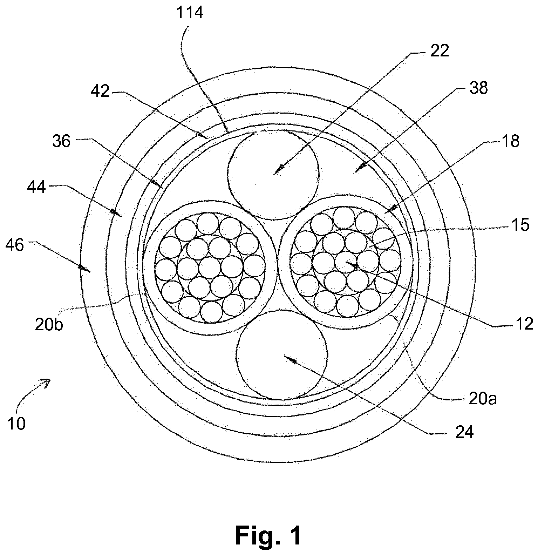

An embodiment of the gas blocking cable of the present invention is indicated in general at 10 in Fig. 1. The illustrated embodiment includes a number of insulated conductors 12. As an example only, the conductors may be 14 AWG, 19 strand, silver plated copper wire. The strand interstitial spaces or areas 15 are filled with a silicone compound. An insulation material 18 circumferentially surrounds the conductors. Insulation 18 may be, as an example only, helically wrapped polyimide tape with an overcoat of liquid polyimide that is heat cured.

The wires 20a and 20b, which are made up of the insulated conductors 12, are twisted with a drain wire 22 and a filler 24 to provide the cable with a round profile. The drain wire 22 is, as an example only, a 16 AWG tin plated copper wire. The high temperature filler 24 is preferably extruded silicone or FEP monofilament.

The twisted wires 20a and 20b, drain wire 22 and high temperature filler member 24 are wrapped with a shield 36 so that they are circumferentially surrounded. The shield 36 may be, as an example only, Aluminum/Mylar™ tape. The spaces or areas 38 between the twisted wires, drain wire and high temperature filler are filled with a silicone compound.

A jacket 42 is extruded over the shield 36 and may be, as an example only, extruded FEP (Fluorinated Ethylene Propylene). As an example only, the nominal diameter of the jacket layer 42 may be 0.588 cm (0.212 inches). A high temperature fiberglass braid 44 preferably covers the jacket 42 while a stainless steel braid 46 preferably covers the fiberglass braid 44. In some cable configurations, an additional extruded FEP jacket is applied over the stainless steel braid.

It is to be understood that the embodiment of the gas blocking cable of Fig. 1 is an example only, and that the cable of the invention could be constructed with many alternative materials and number of any of the conductors, wires, drain wires and/or fillers in many alternative configurations.

A variety of filling material compounds may be used to fill the interstitial and other spaces or areas in the cable in the manner described above. The filling material must be inert, non-flammable and able to withstand, and suitable for operation, temperatures up to at least approximately 200°C. A two-part, room temperature curable silicone compound preferably is used. While such a silicone compound is preferably used, other suitable compounds in the art may alternatively be used. Examples of suitable silicone compounds include, but are not limited to, the following:
**a. One-part heat-cure silicone, TSE-322 made by Momentive^{™}.**
**b. CST 2127, two-part silicone.** This is a room-temperature cure two-part silicone compound available from Cri-Sil^{™} Silicone Technologies LLC of Biddeford, Maine.
**c. CST-2327, two-part silicone.** This is a modified version of CST 2127 and is the preferred silicone compound for use, for example, in the embodiment of Fig. 1, and is also available from Cri-Sil^{™} Silicone Technologies LLC of Biddeford, Maine.

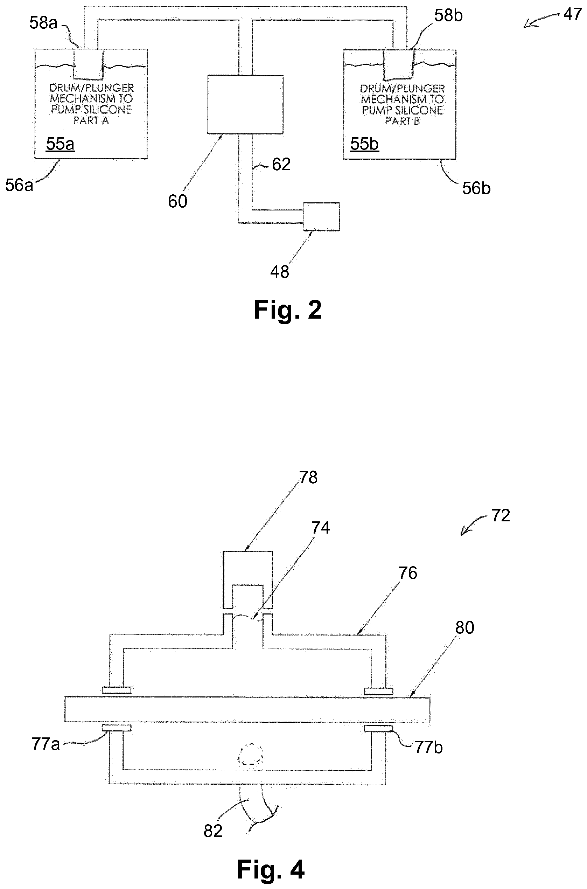

In order to get the compound into the space between the different insulated conductors and wires, it has to be applied during the cabling process or in a separate process right before the Aluminum/Mylar™ tapes goes on the cable. Application devices that may be used for this purpose are illustrated in Figs. 2-6. The filling material may be applied before or after conductors and/or wires are twisted. Multiple application devices may be used in series as required to produce the cable based on the configuration and intended use of the cable.

The following examples assume that, with reference to Fig. 1, the wires 20a and 20b have been provided by a supplier with their interstitial spaces 15 filled with a silicon compound (such as those described above) or another suitable material.

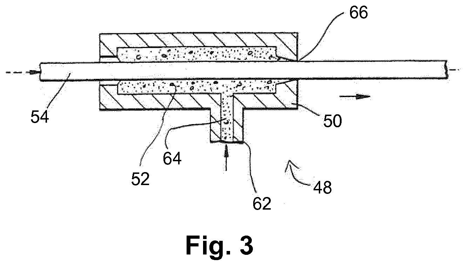

An example of an application device is indicated in general at 47 in Fig. 2. As illustrated in Figs. 2 and 3, the application device features an applicator, illustrated at 48 in Figs. 2 and 3. As illustrated in Fig. 3, the applicator includes an application housing 50 that encloses a pressure chamber 52, through which the twisted wires (and any filler such as 24 of Fig. 1) 54 travel during the cabling operation just prior to the taping operation.

With reference to Fig. 2, one part (55a) of a two-part silicone compound is pumped from a drum 56a using a plunger system or hydraulic pump 58a, while the other part (55b) of the two-part silicone compound is pumped from drum 56b using plunger system or hydraulic pump 58b. Other pumping devices known in the art may be used in place of plunger system or hydraulic pumps 58a and 58b. The pressurized flows of the first and second parts of the silicon compound from drums 56a and 56b are mixed in a mixing nozzle 60 and then flow to the applicator 48 via line 62. With reference to Fig. 2, the flow of the pressurized, mixed silicon compound 64 through line 62 pressurizes the chamber 52 with silicone compound as the wires (and any filler) 54 pass through the chamber. As an example only, the preferred pressure of chamber 52 is approximately 13,790-34,474 kPa (2000-5000 psi).

A further example of an application device is indicated in general at 72 in Fig. 4. In this example, a silicone compound (such as a mixed two-part silicone compound) 74 is stored within a chamber 76. A pressurizing device 78 causes the chamber 76 to be pressurized. The twisted wires (and filler) 80 travel through orifices or dies 77a and 77b (which serves as a sizing die) of the chamber 76 so that the silicone compound is applied thereto. A supply line 82 leading from a supply of the silicone compound replenishes the silicone compound 74. Examples of suitable pressurizing devices 78 include an air pump, a piston device (where the piston acts on the silicone compound 74) or, in simpler cable configurations, merely passing the cable through an unpressurized container filled with silicone is sufficient to give adequate deposits of silicone to the cable.

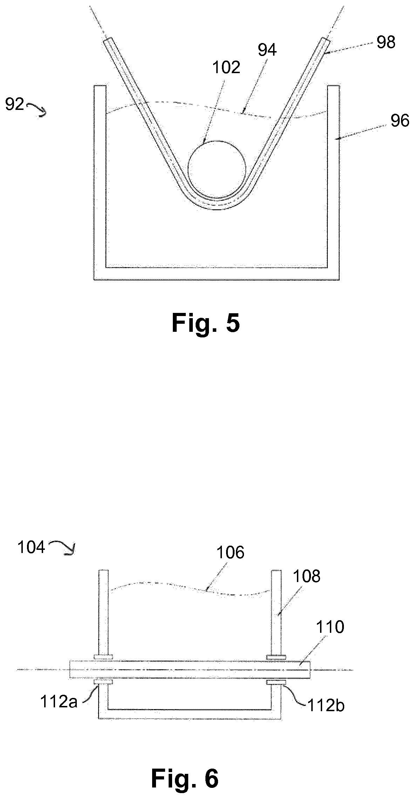

A further example of an application device is indicated in general at 92 in Fig. 5. In this example, a silicone compound (such as a mixed two-part silicone compound) 94 is stored in a container 96 and the twisted wire (and any filler) 98 is "passed through" this container using groove or pulley device 102 as shown so that the silicone compound is applied thereto.

A further example of an application device is indicated in general at 104 in Fig. 6. In this example, a silicone compound (such as a mixed two-part silicone compound) 106 is stored in a container 108 and the twisted wire (and any filler) 110 is "passed through" orifices or dies 112a and 112b (which serves as a sizing die) in the container so that the silicone compound is applied thereto.

As noted previously, the application device fills the cable with the silicone compound at the cabling stage prior to the taping stage. In the case of the examples shown in Figs. 3, 4 and 6 sizing die 66 (Fig. 3), 77b (Fig. 4) or 112b (Fig. 6) on the chamber outlets smoothes the surface of the cable as it exits the application devices. The tape then goes over the silicon compound, wires and filler using processes known in the prior art (such as, as an example only, U.S. Patent No. 4,767,1 2 to Parfree et al.) and further encapsulates the silicone compound, wires and filler. While the silicone compound is still in a "mushy" stage, the tape provides containment. The process must be robust enough to fill all the space between the conductors.

The next process is extrusion of the FEP (Fluorinated Ethylene Propylene) jacket over the Aluminum/Mylar™ tape. Since the Mylar^{™} side of the tape and plastic on the jacket doesn't fuse, the space between the tape and the jacket is another potential leak path. A layer of the silicone compound (such as those described above), indicated at 114 in Fig. 1, is applied over the Aluminum/Mylar™ tape, using a second application device. This application device may be of the type shown in any of Figs. 2-6, or any other application device known in the art, to close this leak path. Preferably, a surplus amount of silicone compound is applied in one application so that there is a remnant layer of silicone on the Aluminum/Mylar™ tape.

The entire cable is then post cured (with or without the application of temperature) to set the silicone compound. The curing can be achieved, for example, a) in 24 hours either by room temperature vulcanization of the compound, or b) in 3-4 hours by placing the cables in an air circulating oven for 4-6 hours at 65°C (150°F).

Braids (such as 44 and 46 of Fig. 1) may then be applied to the cable using processes well known in the art.

As noted previously, the supplier of the wire preferably applies the correct amount of silicone compound or other filling material between the conductor strands, sufficient to seal the leakage path between the conductor strands. Alternatively, an application device of the type shown in Figs. 2-6, or any other application device known in the art, may be used to close the leak paths between the conductors of the wire.

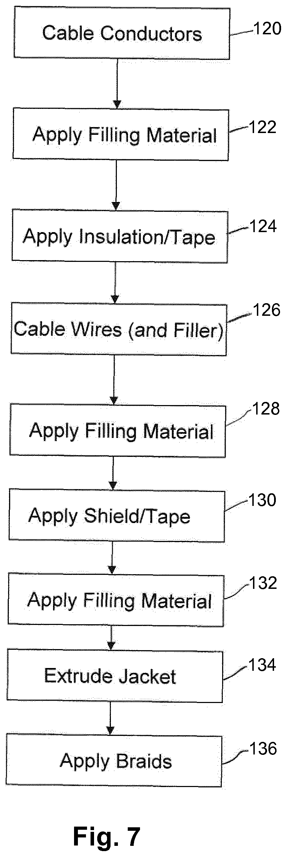

An illustration of a process for making a gas blocking cable in an embodiment of the invention is illustrated in Fig. 7 where 120 illustrates cabling insulated conductors (such as 12 in Fig. 1). After the insulated conductors are cabled, or while they are being cabled, filling material, such as silicone compound, is applied to the interstitial space (15 in Fig. 1) using one or more of the application devices of Figs. 2-6 as indicated at 122. As indicated at 124, an insulation material (18 in Fig. 1) such as a polyimide tape with an overcoat of liquid polyimide is then applied to form a wire (20a and 20b of Fig. 1). As indicated at 126, the wires (20a, 20b and 22 of Fig. 1) and any filler (24 of Fig. 1) are cabled next. Filling material, such as silicone compound is then applied at 128 to the spaces (38) between the twisted wires and filler using one or more of the application devices of Figs. 2-6. A shield (36 in Fig. 1) such as Aluminum Mylar^{™} tape, is then applied at 130. As indicated at 132, the shield is coated with a layer of filling material such as silicone compound. Next, at 134, extrusion of the FEP (Fluorinated Ethylene Propylene) jacket (42 in Fig. 1) over the shield occurs. Finally, as shown at 136, braids (44 and 46 in Fig. 1) are applied to the cable.

The multi-conductor cable described above is capable of blocking passage of gas/fluid through the interstitial spaces in the multi-conductor cable to prevent passage of high pressure gases in turbine and power generation applications.

The cable described and constructed in the manner above is able to pass a fluid (oil) leakage test at a high pressure of 435 psi (about 3000 kPa) and may withstand temperatures up to approximately 200°C and still maintains flexibility.

While the preferred embodiments of the invention have been shown and described, it will be apparent to those skilled in the art that changes and modifications may be made therein without departing from the scope of the invention, which is defined by the appended claims.

## Claims

1. A gas blocking cable (10) comprising:
a) a plurality of wires (20a, 20b), each wire including
i. a plurality of conductors (12) having first interstitial areas (15) there between;
ii. an insulation material (18) circumferentially surrounding the plurality of conductors;
iii. a conductor filling material positioned within the first interstitial areas between the plurality of conductors;
b) a shield (36) circumferentially surrounding the plurality of wires so that a cable is formed with second areas between the plurality of wires;
c) a wire filling material positioned within the second areas (38) between the plurality of wires;
d) a jacket (42) circumferentially surrounding the shield; and
e) a layer (114) of filling material positioned in a space between the shield and the jacket;
wherein each of the conductor filling material, the wire filling material and the layer of filling material is inert, non-flammable and able to withstand a temperature of at least approximately 200°C,
whereby, in use, passage of a high pressure gas at a pressure of approximately 3,000 kPa (435 psi) or a high pressure fluid at a pressure of approximately 3,000 kPa (435 psi) through the first interstitial areas, the second areas, and the space between the shield and the jacket is prevented.

2. The gas blocking cable (10) of claim 1 wherein the jacket (42) is extruded over the shield (36) and the layer of filling material positioned in the space between the shield and the jacket.

3. The gas blocking cable (10) of claim 1 further comprising a braid (44) circumferentially surrounding the jacket (42).

4. The gas blocking cable (10) of claim 1 wherein the plurality of wires (20a, 20b) are twisted.

5. The gas blocking cable (10) of claim 4 further comprising a drain wire (22) that is twisted along with the plurality of wires (20a, 20b).

6. The gas blocking cable (10) of claim 4 further comprising a filler member (24) that is twisted along with the plurality of wires (20a, 20b).

7. The gas blocking cable (10) of claim 1 wherein the wire filling material and the conductor filling material are different materials.

8. The gas blocking cable (10) of claim 1 wherein the wire filling material is a silicone compound.

9. The gas blocking cable (10) of claim 1 wherein the conductor filling material is a silicone compound.

10. A method for making a gas blocking cable (10) comprising the steps of:
a) cabling a plurality of conductors (12) so that first interstitial areas (15) are formed there between;
b) applying a conductor filling material to the first interstitial areas between the plurality of conductors so that the first interstitial areas are filled, where the conductor filing material is inert, non-flammable and able to withstand a temperature of at least approximately 200°C;
c) applying insulation (18) so as to circumferentially surround the plurality of conductors and conductor filling material so that a first wire (20a) is formed;
d) repeating steps a) through c) so that a second wire (20b) is formed;
e) cabling the first and second wires so that second areas (38) are formed there between;
f) applying a wire filling material to the second areas between the plurality of wires so that the second areas are filled, where the wire filling material is inert, non-flammable and able to withstand a temperature of at least approximately 200°C;
g) applying a shield material (36) so as to circumferentially surround the first and second wires and the wire filling material;
h) applying a layer (114) of filling material over the shield material, where the filling material is inert, non-flammable and able to withstand a temperature of at least approximately 200°C; and
i) applying and extruding a jacket material (42) circumferentially around the layer of filling material, such that the layer of filling material is positioned in a space between the shield material and the jacket material,
whereby the gas blocking cable is able to prevent passage of a high pressure gas at a pressure of approximately 3,000 kPa (435 psi) or a high pressure fluid at a pressure of approximately 3,000 kPa (435 psi) through the first interstitial areas, the second areas, and the space between the shield and the jacket.

11. The method of claim 10 further comprising the steps of curing the applied conductor filling material and curing the applied wire filling material.

12. The method of claim 10 further comprising the step of braiding a material (44) over the applied jacket material (42).

13. The method of claim 10 wherein the wire filling material and the conductor filling material are different materials.

14. The method of claim 10 wherein the wire filling material is a silicone compound, and/or the conductor filling material is a silicone compound.

## Patentansprüche

1. Gasblockierungskabel (10), das Folgendes umfasst:
a) mehrere Drähte (20a, 20b), wobei jeder Draht Folgendes einschließt:
i. mehrere Leiter (12), die erste Zwischenbereiche (15) zwischen denselben haben,
ii. ein Isolationsmaterial (18), das die mehreren Leiter umlaufend umgibt,
iii. ein Leiterfüllmaterial, das innerhalb der ersten Zwischenbereiche zwischen den mehreren Leitern angeordnet ist,
b) eine Abschirmung (36), welche die mehreren Leiter umlaufend umgibt, sodass ein Kabel mit zweiten Bereichen zwischen den mehreren Leitern gebildet wird,
c) ein Drahtfüllmaterial, das innerhalb der zweiten Bereiche (38) zwischen den mehreren Leitern angeordnet ist,
d) einen Mantel (42), der die Abschirmung umlaufend umgibt, und
e) eine Lage (114) von Füllmaterial, die in einem Raum zwischen der Abschirmung und dem Mantel angeordnet ist,
wobei sowohl das Leiterfüllmaterial als auch das Drahtfüllmaterial und die Lage von Füllmaterial inert, nicht entflammbar und dazu in der Lage sind, einer Temperatur von mindestens annähernd 200°C zu widerstehen,
wobei, bei Anwendung, der Durchgang eines Hochdruckgases bei einem Druck von annähernd 3 000 kPa (435 psi) oder einer Hochdruckflüssigkeit bei einem Druck von annähernd 3 000 kPa (435 psi) durch die ersten Zwischenbereiche, die zweiten Bereiche und den Raum zwischen der Abschirmung und dem Mantel verhindert wird.

2. Gasblockierungskabel (10) nach Anspruch 1, wobei der Mantel (42) über der Abschirmung (36) stranggepresst ist und die Lage von Füllmaterial in dem Raum zwischen der Abschirmung und dem Mantel angeordnet ist.

3. Gasblockierungskabel (10) nach Anspruch 1, das ferner ein Geflecht (44) umfasst, das den Mantel (42) umlaufend umgibt.

4. Gasblockierungskabel (10) nach Anspruch 1, wobei die mehreren Drähte (20a, 20b) verdrillt sind.

5. Gasblockierungskabel (10) nach Anspruch 4, das ferner einen Abzugsdraht (22) umfasst, der zusammen mit den mehreren Drähten (20a, 20b) verdrillt ist.

6. Gasblockierungskabel (10) nach Anspruch 4, das ferner ein Füllelement (24) umfasst, das zusammen mit den mehreren Drähten (20a, 20b) verdrillt ist.

7. Gasblockierungskabel (10) nach Anspruch 1, wobei das Drahtfüllmaterial und das Leiterfüllmaterial unterschiedliche Materialien sind.

8. Gasblockierungskabel (10) nach Anspruch 1, wobei das Drahtfüllmaterial eine Silikonverbindung ist.

9. Gasblockierungskabel (10) nach Anspruch 1, wobei das Leiterfüllmaterial eine Silikonverbindung ist.

10. Verfahren zum Herstellen eines Gasblockierungskabels (10), wobei das Verfahren die folgenden Schritte umfasst:
a) Verkabeln mehrerer Leiter (12), sodass erste Zwischenbereiche (15) zwischen denselben gebildet werden,
b) Aufbringen eines Leiterfüllmaterials auf die ersten Zwischenbereiche zwischen den mehreren Leitern, sodass die ersten Zwischenbereiche gefüllt werden, wobei das Leiterfüllmaterial inert, nicht entflammbar und dazu in der Lage ist, einer Temperatur von mindestens annähernd 200°C zu widerstehen,
c) Aufbringen einer Isolation (18), sodass sie die mehreren Leiter und das Leiterfüllmaterial umlaufend umgibt, sodass ein erster Draht (20a) gebildet wird,
d) Wiederholen der Schritte a) bis einschließlich c), sodass ein zweiter Draht (20b) gebildet wird,
e) Verkabeln des ersten und des zweiten Drahtes, sodass zweite Bereiche (38) zwischen denselben gebildet werden,
f) Aufbringen eines Drahtfüllmaterials auf die zweiten Bereiche zwischen den mehreren Drähten, sodass die zweiten Bereiche gefüllt werden, wobei das Drahtfüllmaterial inert, nicht entflammbar und dazu in der Lage ist, einer Temperatur von mindestens annähernd 200°C zu widerstehen,
g) Aufbringen eines Abschirmungsmaterials (36), sodass es den ersten und den zweiten Draht und das Drahtfüllmaterial umlaufend umgibt,
h) Aufbringen einer Lage (114) von Füllmaterial über dem Abschirmungsmaterial, wobei sowohl das Füllmaterial inert, nicht entflammbar und dazu in der Lage ist, einer Temperatur von mindestens annähernd 200°C zu widerstehen, und
i) Aufbringen und Strangpressen eines Mantelmaterials (42) umlaufend um die Lage von Füllmaterial, sodass die Lage von Füllmaterial in einem Raum zwischen dem Abschirmungsmaterial und dem Mantelmaterial angeordnet wird,
wodurch das Gasblockierungskabel dazu in der Lage ist, den Durchgang eines Hochdruckgases bei einem Druck von annähernd 3 000 kPa (435 psi) oder einer Hochdruckflüssigkeit bei einem Druck von annähernd 3 000 kPa (435 psi) durch die ersten Zwischenbereiche, die zweiten Bereiche und den Raum zwischen der Abschirmung und dem Mantel zu verhindern.

11. Verfahren nach Anspruch 10, das ferner die Schritte des Aushärtens des aufgebrachten Leiterfüllmaterials und des Aushärtens des aufgebrachten Drahtfüllmaterials umfasst.

12. Verfahren nach Anspruch 10, das ferner den Schritt des Flechtens eines Materials (44) über das aufgebrachte Mantelmaterial (42) umfasst.

13. Verfahren nach Anspruch 10, wobei das Drahtfüllmaterial und das Leiterfüllmaterial unterschiedliche Materialien sind.

14. Verfahren nach Anspruch 10, wobei das Drahtfüllmaterial eine Silikonverbindung ist und/oder das Leiterfüllmaterial eine Silikonverbindung ist.

## Revendications

1. Câble de blocage de gaz (10), comprenant :
a) plusieurs fils (20a, 20b), chaque fil incluant :
i. plusieurs conducteurs (12) comportant des premières zones interstitielles (15) entre eux ;
ii. un matériau d'isolation (18) entourant la circonférence des plusieurs conducteurs ;
iii. un matériau de remplissage des conducteurs positionné dans les premières zones interstitielles entre les plusieurs conducteurs ;
b) un blindage (36) entourant la circonférence des plusieurs fils, de sorte qu'un câble est formé avec des deuxièmes zones entre les plusieurs fils ;
c) un matériau de remplissage des fils positionné dans les deuxièmes zones (38) entre les plusieurs fils ;
d) une gaine (42) entourant la circonférence du blindage ;
e) une couche (114) de matériau de remplissage positionnée dans un espace entre le blindage et la gaine ;
dans lequel chaque matériau, le matériau de remplissage des conducteurs, le matériau de remplissage des fils et la couche de matériau de remplissage, est inerte, ininflammable et capable de résister à une température atteignent au moins environ 200°C ;
un passage de gaz haute pression, ayant une pression d'environ 3.000 kPa (435 psi), ou d'un fluide haute pression ayant une pression d'environ 3.000 kPa (435 psi) à travers les premières zones interstitielles, les deuxièmes zones et l'espace entre le blindage et la gaine, étant ainsi empêché en service.

2. Câble de blocage de gaz (10) selon la revendication 1, dans lequel la gaine (42) est extrudée au-dessus du blindage (36), la couche de matériau de remplissage étant positionnée dans l'espace entre le blindage et la gaine.

3. Câble de blocage de gaz (10) selon la revendication 1, comprenant en outre une tresse (44) entourant la circonférence de la gaine (42).

4. Câble de blocage de gaz (10) selon la revendication 1, dans lequel les plusieurs fils (20a, 20b) sont torsadés

5. Câble de blocage de gaz (10) selon la revendication 4, comprenant en outre un fil de drainage (22) torsadé avec les plusieurs fils (20a, 20b).

6. Câble de blocage de gaz (10) selon la revendication 4, comprenant en outre un élément de remplissage (24) torsadé avec les plusieurs fils (20a, 20b).

7. Câble de blocage de gaz (10) selon la revendication 1, dans lequel le matériau de remplissage des fils et le matériau de remplissage des conducteurs sont des matériaux différents.

8. Câble de blocage de gaz (10) selon la revendication 1, dans lequel le matériau de remplissage des conducteurs est un composé de silicone.

9. Câble de blocage de gaz (10) selon la revendication 1, dans lequel le matériau de remplissage des conducteurs est un composé de silicone.

10. Procédé de fabrication d'un câble de blocage de gaz (10), comprenant les étapes ci-dessous :
a) câblage de plusieurs conducteurs (12) de sorte à former des premières zones interstitielles (15) entre eux ;
b) application d'un matériau de remplissage des conducteurs sur les premières zones interstitielles entre les plusieurs conducteurs, de sorte à remplir les premières zones interstitielles, le matériau de remplissage des conducteurs étant inerte, ininflammable et capable de résister à d'une température atteignant au moins environ 200°C ;
c) application d'une isolation (18), de sorte à entourer la circonférence des plusieurs conducteurs et le matériau de remplissage des conducteurs, un premier fil (20a) étant ainsi formé ;
d) répétition des étapes a) à c), de sorte à former un deuxième fil (20b) ;
e) câblage des premier et deuxième fils, de sorte à former des deuxièmes zones (38) entre eux ;
f) application d'un matériau de remplissage des fils sur les deuxièmes zones entre les plusieurs fils, pour remplir les deuxièmes ozones, le matériau de remplissage des fils étant inerte, ininflammable et capable de résister à une température atteignant au moins environ 200°C ;
g) application d'un matériau de blindage (36) de sorte à entourer la circonférence des premier et deuxième fils et le matériau de remplissage des fils ;
h) application d'une couche (114) de matériau de remplissage au-dessus du matériau de blindage, le matériau de remplissage étant inerte, ininflammable et capable de résister à une température atteignant au moins environ 200° C ; et
i) application et extrusion d'un matériau de gaine (42) autour de la circonférence de la couche de matériau de remplissage, de sorte que la couche de matériau de remplissage est positionnée dans un espace entre le matériau de blindage et le matériau de la gaine ;
le câble de blocage du gaz étant ainsi capable d'empêcher le passage d'un gaz haute pression, ayant une pression d'environ 3.000 kPa (435 psi) ou d'un fluide haute pression, ayant une pression d'environ 3.000 kPa (435 psi), à travers les premières zones interstitielles, les deuxièmes zones et l'espace entre le blindage et la gaine.

11. Procédé selon la revendication 10, comprenant en outre les étapes de durcissement du matériau de remplissage des conducteurs appliqué et de durcissement du matériau de remplissage des fils appliqué.

12. Procédé selon la revendication 10, comprenant en outre l'étape de tressage d'un matériau (44) au-dessus du matériau de la gaine appliqué (42).

13. Procédé selon la revendication 10, dans lequel le matériau de remplissage des fils et le matériau de remplissage des conducteurs sont des matériaux différents.

14. Procédé selon la revendication 10, dans lequel le matériau de remplissage des fils est un composé de silicone, et/ou le matériau de remplissage des conducteurs est un composé de silicone.
